# EUROPÄISCHE PATENTSCHRIFT

(11) **EP 0 569 769 B1**
(45) Veröffentlichungstag und Bekanntmachung des Hinweises auf die Patenterteilung: **07.01.1999**
(21) Anmeldenummer: 93106767.2
(22) Anmeldetag: 27.04.1993
(51) Int. Cl.: H04B 10/16, H01S 3/094, H04B 10/17

(54) **Optisches Nachrichtenübertragungssystem mit Überwachungsvorrichtung zur Vermeidung von Riesenimpulsen**
Optical telecommunications system with monitoring device for avoiding strong pulses
Système de télécommunications optique avec dispositif de surveillance pour éviter de fortes impulsions

(30) Priorität: 09.05.1992 DE 4215338
(43) Veröffentlichungstag der Anmeldung: 18.11.1993
(73) Patentinhaber: ALCATEL ALSTHOM COMPAGNIE GENERALE D'ELECTRICITE, 75008 Paris (FR)
(72) Erfinder: Heidemann, Rolf, Dr., W-7146 Tamm (DE)
(74) Vertreter: Pohl, Herbert, Dipl.-Ing.

(56) Entgegenhaltungen:
- EP-A- 0 507 367
- EP-A- 0 515 179
- US-A- 3 887 876
- PATENT ABSTRACTS OF JAPAN vol. 6, no. 47 (E-99)(925) 26. März 1982 & JP-A-56 162 554 ( NIPPON DENSHIN DENWA KOSHA )
- PATENT ABSTRACTS OF JAPAN vol. 15, no. 334 (E-1104)26. August 1991 & JP-A-3 127 887 ( MITSUBISHI CABLE IND )

## Beschreibung

Die Erfindung betrifft ein optisches Nachrichtenübertragungssystem nach dem Oberbegriff des Anspruchs 1 und einen faseroptischen Verstärker nach dem Oberbegriff des Anspruchs 2.

Solche Systeme sind hinreichend bekannt. Ein solches System wird beispielsweise in Wedding, B. et al "10 GBit/s To 260 000 Subscribers Using 0ptical Amplifier Distribution Network"; Contribution for ICC/Supercom'92, Optical Communications 300 Level Session "Impact of Optical Amplifiers on Network Architectures", gezeigt. Einen faseroptischen Verstärker im Detail zeigt beispielsweise EP 0457 349 A2.

Faseroptische Verstärker dienen in einem optischen Nachrichtenübertragungssystem allgemein dazu, ein in einer Lichtwellenleiterstrecke geführtes optisches Signal zu verstärken.

Faseroptische Verstärker werden mit einem Lichtwellenleiter, in dem optische Signale geführt werden, durch Spleiße oder optische Steckverbinder verbunden. Auch die Verbindung einzelner Lichtwellenleiter erfolgt durch Spleiße oder optische Steckverbinder.

Ein in einem faseroptischen Verstärker enthaltenes verstärkendes Lichtwellenleiterstück ist mit Ionen eines Seltenerd-Elements, z.B. Er³⁺, dotiert. Ein von einer Pumplicht-Quelle emittiertes Pumplicht wird über einen Koppler in das verstärkende Lichtwellenleiterstück eingekoppelt. Durch das Pumplicht werden die Erbium-Ionen von einem Grundzustand in einen angeregten Zustand überführt, von dem aus sie, entweder durch spontane oder stimulierte Emission, wieder in den Grundzustand übergehen. Die stimulierte Emission wird durch das durch das verstärkende Lichtwellenleiterstück laufende zu verstärkende optische Signal angeregt. Die spontane Emission wird in dem verstärkenden Lichtwellenleiterstück ebenfalls verstärkt; diese verstärkte spontane Emission (engl.: amplified spontaneous emission, ASE) breitet sich in und entgegen der Übertragungsrichtung des optischen Signals aus und ist ursächlich für das in einem faseroptischen Verstärker auftretende Rauschen.

Bezüglich der Verwendung von optischen Isolatoren gibt es in der Literatur Unterschiede. In der oben genannten Patentschrift wird jeweils am Ein- und Ausgang ein optischer Isolator eingesetzt. In der ebenfalls oben genannten Schrift von Wedding, B.; et al, wird nur am Ausgang ein optischer Isolator verwendet. Optische Isolatoren sorgen für stabilen Verstärkerbetrieb, verschlechtern aber durch ihre Einfügedämpfung die Rauscheigenschaften des Verstärkers. Ein Verzicht auf den optischen Isolator am Signaleingang wirkt sich daher günstig auf die Kosten und die Rauscheigenschaften des faseroptischen Verstärkers aus.

Es ist daher wünschenswert, den optischen Isolator am Eingang wegzulassen. Dabei hat sich jedoch gezeigt, daß beim Öffnen eines optischen Steckverbinders Systemkomponenten, z.B. Photodioden, beschädigt werden können.

Ein faseroptischer Verstärker ist aus der europäischen Patentanmeldung EP-A2- 0 515 179 bekannt; diese europäische Patentanmeldung wurde vor dem Anmeldetag der vorliegenden Erfindung angemeldet, aber erst nach diesm Anmeldetag veröffentlicht (Artikel 54(3) EPÜ). Der daraus bekannte faseroptische Verstärker hat eine Photodiode, eine Pumplichtquelle, eine Treiberschaltung und einen aktiven Wellenleiter. Ein Teil des ankommenden Lichts wird der Photodiode zugeführt, die ein der optischen Leistung proportionales elektrisches Signal erzeugt, das der Treiberschaltung zuführbar ist. Die Treiberschaltung ist nur dann aktiv, d. h. sie schaltet die Pumplichtquelle nur dann ein, wenn sie das elektrische Signal erhält. Erhält sie kein elektrisches Signal ist die Treiberschaltung inaktiv, d. h. die Pumplichtquelle ist ausgeschaltet.

Ein Zwischenverstärker für ein optisches Übertragungssystem ist aus der Patentschrift US-A-3,887,876 bekannt. Der Zwischenverstärker ist ein Halbleiterverstärker, der eine Einrichtung hat, um die Signalflanken eines ankommenden optischen Signals zu formen. Die Einrichtung hat einen elektrischen Verstärker, eine Photodiode und einen Splitter. Die Photodiode, der ein Teil des Signallichts zugeführt wird, ist mit dem elektrischen Verstärker verbunden, der außerdem eine Takteinheit hat, um den Halbleiterverstärker zu pumpen. Zu dem Zeitpunkt, in dem Signallicht an der Photodiode und am Halbleiterverstärker ankommt, wird dieser kurzzeitig gepumpt. Durch diese Einrichtung wird festgestellt, wenn Signallicht am Zwischenverstärker ankommt, um dann den Halbleiterverstärker impulsartig zu pumpen. Eine Detektion der Abnahme des Signallichts erfolgt nicht.

Es ist eine Aufgabe der Erfindung, ein optisches Nachrichtenübertragungssystem der eingangs genannten Art anzugeben, bei dem die Gefahr einer Beschädigung von Systemkomponenten beim Öffnen eines optischen Steckverbinders vermieden wird. Diese Aufgabe wird wie in Patentanspruch 1 angegeben gelöst.

Eine weitere Aufgabe ist, einen faseroptischen Verstärker für ein solches System anzugeben. Diese Aufgabe wird, wie in Anspruch 2 angegeben, gelöst.

Weiterbildungen ergeben sich aus den Unteransprüchen.

Die Erfindung wird nun anhand der Zeichnungen näher erläutert. Es zeigen:
- Fig. 1: ein Ausführungsbeispiel eines faseroptischen Verstärkers mit erfindungsgemäßer Überwachungsvorrichtung,
- Fig. 2: den zeitlichen Verlauf der Dämpfung D, der Reflexion R und der Eingangsleitung Pᵢₙ des faseroptischen Verstärkers beim Auftrennen des optischen Steckverbinders,
- Fig. 3: ein Beispiel, wie die in Fig. 1 gezeigte Überwachungsvorrichtung zur Stromunterbrechung der Pumplicht-Quelle ausgeführt sein kann,
- Fig. 4: ein weiteres Ausführungsbeispiel der in Fig. 1 gezeigten Überwachungsvorrichtung zur Unterbrechung des Lichtweges der Pumplicht-Quelle.

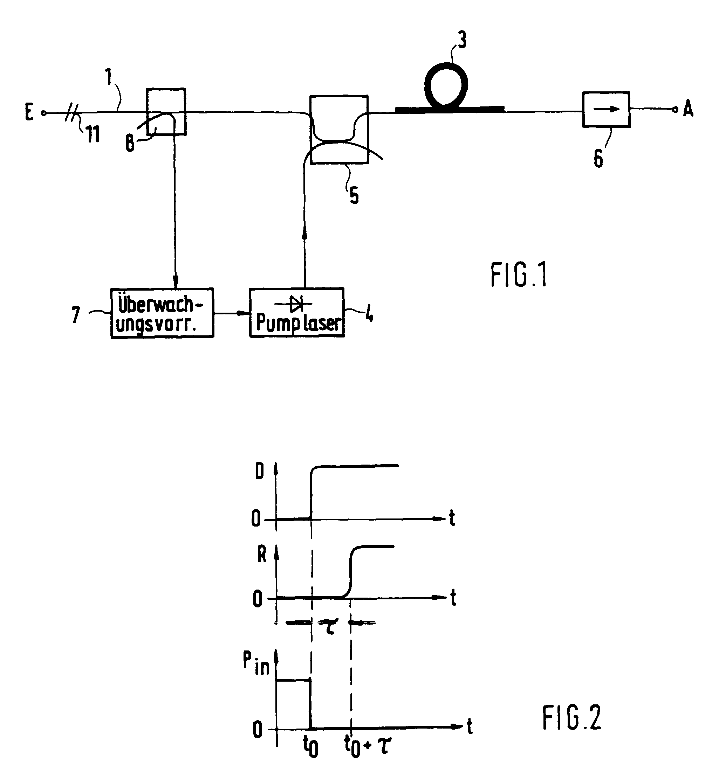

In Fig. 1 ist ein Pumplicht-Koppler bezogen auf die Übertragungsrichtung des optischen Signals vor einem verstärkenden Lichtwellenleiterstück angeordnet. Es kann aber auch, bezogen auf die Übertragungsrichtung, hinter dem verstärkenden Faserstück angeordnet sein. Für die vorliegende Erfindung spielt die Anordnung des Kopplers keine Rolle.

Ein faseroptischer Verstärker nach Fig. 1 besteht wie bekannte faseroptische Verstärker aus einem Lichtwellenleiterstück 1, einem beispielsweise mit Er³⁺-Ionen dotierten verstärkenden Lichtwellenleiterstück 3, einer Pumplicht-Quelle 4 mit Laserdiode, im folgenden auch als Pumplaser bezeichnet, die das Pumplicht für den faseroptischen Verstärker erzeugt und einem Pumplicht-Koppler 5, der es ermöglicht, das Pumplicht in das verstärkende Lichtwellenleiterstück 3 einzukoppeln.

Über einen Eingang E und einem Ausgang A ist der faseroptische Verstärker mit einer Lichtwellenleiterstrecke verbunden. Eine am Eingang E zur Verfügung stehende Eingangsleistung wird verstärkt. Ein optischer Isolator 6 schützt den faseroptischen Verstärker vor Rückwirkungen von eine nachfolgenden Lichtwellenleiterstrecke oder Verstärkerstufe.

Die erfindungsgemäße Ergänzung des faseroptischen Verstärkers besteht darin, daß ein Teil der Eingangsleistung über einen Koppler 8 ausgekoppelt wird und einer Überwachungsvorrichtung 7 zugeführt wird, die den Pumplaser 4 bei abfallender Eingangsleistung abschaltet oder einen optischen Schalter 12 so steuert, daß kein Pumplicht in das verstärkende Lichtwellenleiterstück 3 gelangt.

Durch die Abschaltbarkeit des Pumplasers bzw. die Unterbrechbarkeit des Lichtweges des Pumplichtes wird das folgende Problem gelöst.

Wie bereits erwähnt können unter Umständen Systemkomponenten beim Öffnen eines optischen Steckverbinders beschädigt werden.

Es wurde erkannt, daß die Beschädigung von Systemkomponenten durch Impulse hoher Energie erfolgt, die beim Öffnen eines optischen Steckverbinders entstehen. Das Entstehen dieser Riesenimpulse läßt sich wie folgt erklären. Im Normalfall sind Reflexionen, die an den optischen Steckverbindern auftreten gering und daher unproblematisch. Wird allerdings die Lichtwellenleiterstrecke im Betrieb durch Öffnen eines optischen Steckverbinders unterbrochen, fällt die Eingangsleistung des faseroptischen Verstärkers schlagartig auf Null ab. An einer solchen Unterbrechungsstelle kann Lichtleistung reflektiert werden. Da der Pumpvorgang unabhängig von der Eingangsleistung ist, wird in das Verstärkungsmedium ständig Energie gepumpt; es kommt zur völligen Besetzungsinversion. Durchläuft reflektiertes Licht, das z.B. von der spontanen Emission herrührt, das verstärkende Lichtwellenleiterstück 3, dessen laseraktive Substanz sich im invertierten Zustand befindet, wird die gespeicherte Energie schlagartig freigesetzt. Es kommt zur Emission eines Riesenimpulses, der eine Gefahr für nachfolgende Systemkomponenten, beispielsweise Photodetektoren, darstellt.

Bei einer Unterbrechung der Lichtwellenleiterstrecke, beispielsweise zum Zeitpunkt t = T₀, fällt die Eingangsleistung des faseroptischen Verstärkers, die mit Pᵢₙ bezeichnet ist, auf Null ab. In diesem Fall hört die stimulierte Emission im verstärkenden Lichtwellenleiterstück 3 auf; die immer stattfindende spontane Emission erfolgt jedoch weiterhin.

Aufgrund von Messungen an optischen Steckverbindern konnte der zeitliche Verlauf der Dämpfung D, der Reflexion R und der Eingangsleistung Pᵢₙ des faseroptischen Verstärkers bei einer Unterbrechung des Lichtwellenleiters, wie in Fig. 2 gezeigt, ermittelt werden. Diese Unterbrechungsstelle ist aufgrund des dort entstehenden Sprungs im Brechungsindex Ausgangspunkt für Reflexionen, so daß dort das Licht der spontanen Emission reflektiert wird und das verstärkende Lichtwellenleiterstück in Signalrichtung durchläuft. Das verstärkende Lichtwellenleiterstück befindet sich in einem angeregten Zustand, da der Pumplaser unabhängig vom Eingang dieses pumpt und wegen des fehlenden Signals keine stimulierte Emission erfolgt. Das reflektierte Licht erreicht das verstärkende Lichtwellenleiterstück 3 in diesem Zustand der maximalen Besetzungsinversion und löst dadurch die Freisetzung der gespeicherten Energie aus. Es kommt zur Emission eines Riesenimpulses.

Vergleichbar einem Effekt, der von Festkörperlasern wohlbekannt ist, wird für die Riesenimpulsemission auch der Begriff des Q-Switching oder der Güte-Schaltung verwendet. Für Halbleiterlaser beschreibt diesen Effekt z.B. Petermann, U. in "Laser Diode Modulation and Noise" Kluwer Academic Publishers, UT K Scientific Publisher, Tokyo 1988.

Die Erfindung beruht auf der Erkenntnis, daß die auftretende Reflexion R erst nach einer Verzögerungszeit τ auftritt, nach dem die Eingangsleistung durch die Vergrößerung der Dämpfung D abgefallen ist. Dadurch ist es erfindungsgemäß möglich, aus der Eingangsleistung ein Steuersignal abzuleiten.

Die erfindungsgemäße Funktion der Überwachungsvorrichtung besteht darin, sobald die Eingangsleistung des faseroptischen Verstärkers einen bestimmten Schwellenwert unterschreitet, den Stromweg oder den Lichtweg des Pumplasers 4 innerhalb der Zeit τ zu unterbrechen. Messungen haben ergeben, daß die Zeit τ etwa 1 ms beträgt und daher ausreichend lang für ein rechtzeitiges Abschalten des Pumplasers 4 oder ein rechtzeitiges Unterbrechen des Lichtweges des Pumplasers 4 ist.

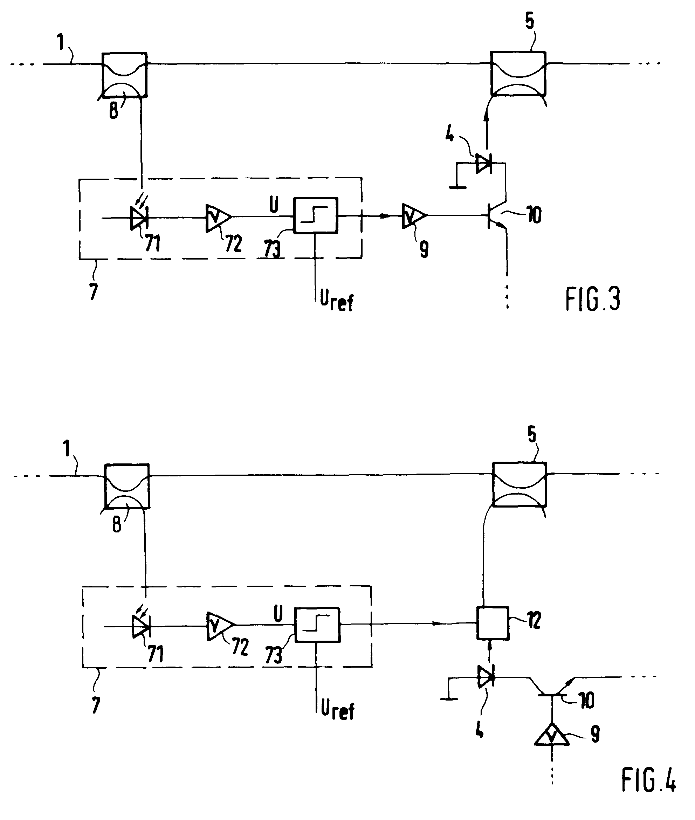

Ein Ausführungsbeispiel, wie das von der Eingangsleistung abgeleitete optische Signal weiterverarbeitet wird, ist in Fig. 3 gezeigt. Vom Ausgang des faseroptischen Kopplers 8 gelangt es auf einen Photodetektor 71. Dessen elektrisches Ausgangssignal wird von einem Verstärker 72 verstärkt und einem Schwellenwert-Schalter 73 zugeführt, der die Ausgangsspannung U des Verstärkers mit einer Referenzspannung U_{ref} vergleicht. Fällt die Verstärkerausgangsspannung unter eine Schwelle, die durch die Referenzspannung gegeben ist, gibt die Überwachungsvorrichtung, die aus den Komponenten 71, 72 und 73 besteht, ein Steuersignal ab. Ein anschließender Verstärker 9 steuert damit einen Transistor 10, der im Stromweg des Pumplasers 4 liegt. Dadurch ist der Stromweg des Pumplasers unterbrechbar und damit die Lichtemission des Pumplasers abschaltbar.

Alternativ zur Abschaltung des Pumplasers ist in Fig. 4 eine Möglichkeit gezeigt, bei der die Überwachungsvorrichtung 7 einen optischen Schalter 12 so steuert, daß dieser den Lichtweg des Pumplasers unterbricht. Ein solcher optischer Schalter ist beispielsweise in Siemens telcom report 6, April 1983, Beiheft "Nachrichtenübertragung mit Licht", S. 205-208 gezeigt.

## Patentansprüche (Patentansprüche für folgende(n) Vertragsstaat(en): DE, FR, GB, ES, IT)

1. Optisches Nachrichtenübertragungssystem mit mindestens einem faseroptischen Verstärker, der ein sein optisches Eingangssignal verstärkendes Lichtwellenleiterstück (3), eine Pumplicht-Quelle (4) und Mittel (5) zum Einkoppeln eines von der Pumplicht-Quelle erzeugten Pumplichtes in das verstärkende Lichtwellenleiterstück (3) hat,
**dadurch gekennzeichnet**, daß eine
Überwachungsvorrichtung (7) vorhanden ist, die bei einem durch Öffnen eines in Signalrichtung vor dem faseroptischen Verstärker angeordneten optischen Steckverbinders (11) verursachten Abfallen der Eingangsleistung eine Einstrahlung von Pumplicht aus der Pumplicht-Quelle (4) in das verstärkende Lichtwellenleiterstück (3) verhindert, wobei dies erfolgt, bevor sich entgegen der Signalrichtung ausbreitendes Licht an diesem geöffneten Steckverbinder (11) reflektiert wird.

2. Faseroptischer Verstärker, der ein sein optisches
Eingangssignal verstärkendes Lichtwellenleiterstück (3), eine Pumplicht-Quelle (4) und Mittel (5) zum Einkoppeln eines von der Pumplicht-Quelle erzeugten Pumplichtes in das verstärkende Lichtwellenleiterstück (3) hat,
**dadurch gekennzeichnet**, daß er eine Überwachungsvorrichtung (7) hat, die bei einem durch Öffnen eines in Signalrichtung vor dem faseroptischen Verstärker angeordneten optischen Steckverbinders (11) verursachten Abfallen der Eingangsleistung eine Einstrahlung von Pumplicht aus der Pumplicht-Quelle (4) in das verstärkende Lichtwellenleiterstück (3) verhindert, wobei dies erfolgt, bevor sich entgegen der Signalrichtung ausbreitendes Licht an diesem geöffneten Steckverbinder (11) reflektiert wird.

3. Optisches Nachrichtenübertragungssystem nach Anspruch 1 oder faseroptischer Verstärker nach Anspruch 2,
dadurch gekennzeichnet, daß die Überwachungsvorrichtung (7) den Stromweg der Pumplicht-Quelle (4) unterbricht.

4. Optisches Nachrichtenübertragungssystem nach Anspruch 1 oder faseroptischer Verstärker nach Anspruch 2,
dadurch gekennzeichnet, daß die Überwachungsvorrichtung (7) den Lichtweg der Pumplicht-Quelle (4) unterbricht.

5. Optisches Nachrichtenübertragungssystem nach Anspruch 1 oder faseroptischer Verstärker nach Anspruch 2,
dadurch gekennzeichnet, daß die Überwachungsvorrichtung (7) einen Photodetektor (71) mit nachgeschaltetem Verstärker (72) enthält und außerdem einen Schwellenwert-Schalter (73), der bei einer Verstärkerausgangsspannung (U), die kleiner als eine Referenzspannung (U_{ref}) ist, ein Steuersignal abgibt.

## Patentansprüche (Patentansprüche für folgende(n) Vertragsstaat(en): BE, CH, DK, LI, NL, SE)

1. Optisches Nachrichtenübertragungssystem mit mindestens einem faseroptischen Verstärker, der ein sein optisches Eingangssignal verstärkendes Lichtwellenleiterstück (3), eine Pumplicht-Quelle (4) und Mittel (5) zum Einkoppeln eines von der Pumplicht-Quelle erzeugten Pumplichtes in das verstärkende Lichtwellenleiterstück (3) hat,
**dadurch gekennzeichnet**, daß eine Überwachungsvorrichtung (7) vorhanden ist, die bei Absinken der optischen Eingangsleistung eine Einstrahlung von Pumplicht aus der Pumplicht-Quelle (4) in das verstärkende Lichtwellenleiterstück (3) verhindert.

2. Faseroptischer Verstärker, der ein sein optisches Eingangssignal verstärkendes Lichtwellenleiterstück (3), eine Pumplicht-Quelle (4) und Mittel (5) zum Einkoppeln eines von der Pumplicht-Quelle erzeugten Pumplichtes in das verstärkende Lichtwellenleiterstück (3) hat,
**dadurch gekennzeichnet**, daß er eine
Überwachungsvorrichtung (7) hat, die bei Absinken der optischen Eingangsleistung eine Einstrahlung von Pumplicht aus der Pumplicht-Quelle (4) in das verstärkende Lichtwellenleiterstück (3) verhindert.

3. Optisches Nachrichtenübertragungssystem nach Anspruch 1 oder faseroptischer Verstärker nach Anspruch 2,
dadurch gekennzeichnet, daß die Überwachungsvorrichtung (7) den Stromweg der Pumplicht-Quelle (4) unterbricht.

4. Optisches Nachrichtenübertragungssystem nach Anspruch 1 oder faseroptischer Verstärker nach Anspruch 2,
dadurch gekennzeichnet, daß die Überwachungsvorrichtung (7) den Lichtweg der Pumplicht-Quelle (4) unterbricht.

5. Optisches Nachrichtenübertragungssystem nach Anspruch 1 oder faseroptischer Verstärker nach Anspruch 2,
dadurch gekennzeichnet, daß die Überwachungsvorrichtung (7) einen Photodetektor (71) mit nachgeschaltetem Verstärker (72) enthält und außerdem einen Schwellenwert-Schalter (73), der bei einer Verstärkerausgangsspannung (U), die kleiner als eine Referenzspannung (U_{ref}) ist, ein Steuersignal abgibt.

## Claims (Claims for the following Contracting State(s): DE, FR, GB, ES, IT)

1. An optical communication system comprising at least one fiber-optic amplifier comprising a section of optical fiber (3) for amplifying its optical input signal, a pump source (4), and means (5) for coupling the pump light generated by the pump source into the amplifying section of optical fiber (3),
**characterized in** that a monitoring device (7) is provided which, upon a drop in input power caused by separating a fiber-optic connector (11) located before the fiber-optic amplifier as viewed in the direction of signal flow, prevents pump light from the pump source (4) from being fed into the amplifying section of optical fiber (3), this being effected before light propagating in a direction opposite the direction of signal flow is reflected at said separated connector (11).

2. A fiber-optic amplifier comprising a section of optical fiber (3) for amplifying its optical input signal, a pump source (4), and means (5) for coupling the pump light generated by the pump source into the amplifying section of optical fiber (3).
**characterized in** that it further comprises a monitoring device (7) which, upon a drop in input power caused by separating a fiber-optic connector (11) located before the fiber-optic amplifier as viewed in the direction of signal flow, prevents pump light from the pump source (4) from being fed into the amplifying section of optical fiber (3), this being effected before light propagating in a direction opposite the direction of signal flow is reflected at said separated connector (11).

3. An optical communication system as claimed in claim 1 or a fiber-optic amplifier as claimed in claim 2, characterized in that the monitoring device (7) interrupts the current path of the pump source (4).

4. An optical communication system as claimed in claim 1 or a fiber-optic amplifier as claimed in claim 2, characterized in that the monitoring device (7) interrupts the light path of the pump source (4).

5. An optical communication system as claimed in claim 1 or a fiber-optic amplifier as claimd in claim 2, characterized in that the monitoring device (7) comprises a photodetector (71) followed by an amplifier (72) and a threshold element (73) which provides a control signal at an amplifier output voltage (U) less than a reference voltage (U_{ref}).

## Claims (Claims for the following Contracting State(s): BE, CH, DK, LI, NL, SE)

1. An optical communication system comprising at least one fiber-optic amplifier comprising a section of optical fiber (3) for amplifying its optical input signal, a pump source (4), and means (5) for coupling the pump light generated by the pump source into the amplifying section of optical fiber (3),
**characterized** in that a monitoring device (7) is provided which upon a decrease in optical input power prevents pump light from the pump source (4) from being fed into the amplifying section of optical fiber (3).

2. A fiber-optic amplifier comprising a section of optical fiber (3) for amplifying its optical input signal, a pump source (4), and means (5) for coupling pump light generated by the pump source into the amplifying section of optical fiber (3), **characterized** in that it further comprises a monitoring device (7) which upon a decrease in optical input power prevents pump light from the pump source (4) from being fed into the amplifying section of optical fiber (3).

3. An optical communication system as claimed in claim 1 or a fiber-optic amplifier as claimed in claim 2, characterized in that the monitoring device (7) interrupts the current path of the pump source (4).

4. An optical communication system as claimed in claim 1 or a fiber-optic amplifier as claimed in claim 2, characterized in that the monitoring device (7) interrupts the light path of the pump source (4).

5. An optical communication system as claimed in claim 1 or a fiber-optic amplifier as claimed in claim 2, characterized in that the monitoring device (7) comprises a photodetector (71) followed by an amplifier (72) and a threshed element (73) which provides a control signal at an amplifier output voltage (U) less than a reference voltage (U_{ref}).

## Revendications (Revendications pour l'(les) Etat(s) contractant(s) suivant(s): DE, FR, GB, ES, IT)

1. Système de télécommunications optique avec au moins un amplificateur à fibres optiques, qui présente un bout de guide d'onde optique (3) amplifiant son signal d'entrée optique, une source de lumière de pompage (4) et des moyens pour injecter une lumière de pompage générée par la source de lumière de pompage dans le bout de guide d'onde optique amplifiant (3), caractérisé en ce qu'il existe un dispositif de surveillance (7) qui, dans le cas d'une chute de la puissance d'entrée provoquée par l'ouverture d'un connecteur (11) optique disposé dans le sens du signal avant l'amplificateur à fibres optiques, empêche une irradiation de la lumière de pompage provenant de la source de la lumière de pompage (4) dans le bout de guide d'onde optique amplifiant (3), ceci s'effectuant avant que la lumière se propageant dans le sens contraire au sens du signal soit réfléchie sur ce connecteur (11) ouvert.

2. Amplificateur à fibres optiques, qui a un bout de guide d'onde optique (3) amplifiant son signal d'entrée optique, une source de lumière de pompage (4) et des moyens (5) pour injecter une lumière de pompage générée par la source de lumière de pompage dans le bout de guide d'onde optique amplifiant (3), caractérisé en ce qu'il a un dispositif de surveillance (7), qui, dans le cas d'une chute de la puissance d'entrée provoquée par l'ouverture d'un connecteur (11) optique disposé dans le sens du signal avant l'amplificateur à fibres optiques, empêche une irradiation de la lumière de pompage provenant de la source de la lumière de pompage (4) dans le bout de guide d'onde optique amplifiant (3), ceci s'effectuant avant que la lumière se propageant dans le sens contraire au sens du signal soit réfléchie sur ce connecteur (11) ouvert.

3. Système de télécommunications optique selon la revendication 1 ou amplificateur à fibres optiques selon la revendication 2, caractérisé en ce que le dispositif de surveillance (7) coupe le trajet de courant de la source de lumière de pompage (4).

4. Système de télécommunications optique selon la revendication 1 ou amplificateur à fibres optiques selon la revendication 2, caractérisé en ce que le dispositif de surveillance (7) coupe le trajet de lumière de la source de lumière de pompage (4).

5. Système de télécommunications optique selon la revendication 1 ou amplificateur à fibres optiques selon la revendication 2, caractérisé en ce que le dispositif de surveillance (7) contient un photodétecteur (71) avec amplificateur (72) placé en aval et d'autre part un interrupteur à seuil (73), qui émet un signal de commande dans le cas d'une tension de sortie d'amplificateur (U) qui est inférieure à une tension de référence (U_{ref}).

## Revendications (Revendications pour l'(les) Etat(s) contractant(s) suivant(s): BE, CH, DK, LI, NL, SE)

1. Système de télécommunications optique avec au moins un amplificateur à fibres optiques, qui présente un bout de guide d'onde optique (3) amplifiant son signal d'entrée optique, une source de lumière de pompage (4) et des moyens pour injecter une lumière de pompage générée par la source de lumière de pompage dans le bout de guide d'onde optique amplifiant (3), caractérisé en ce qu'il existe un dispositif de surveillance (7) qui, dans le cas d'une chute de la puissance d'entrée, empêche une irradiation de la lumière de pompage provenant de la source de la lumière de pompage (4) dans le bout de guide d'onde optique amplifiant: (3).

2. Amplificateur à fibres optiques, qui a un bout de guide d'onde optique (3) amplifiant son signal d'entrée optique, une source de lumière de pompage (4) et des moyens (5) pour injecter une lumière de pompage générée par la source de lumière de pompage dans le bout de guide d'onde optique amplifiant (3), caractérisé en ce qu'il a un dispositif de surveillance (7), qui, dans le cas d'une chute de la puissance d'entrée, empêche une irradiation de la lumière de pompage provenant de la source de la lumière de pompage (4) dans le bout de guide d'onde optique amplifiant (3).

3. Système de télécommunications optique selon la revendication 1 ou amplificateur à fibres optiques selon la revendication 2, caractérisé en ce que le dispositif de surveillance (7) coupe le trajet de courant de la source de lumiére de pompage (4).

4. Système de télécommunications optique selon la revendication 1 ou amplificateur à fibres optiques selon la revendication 2, caractérisé en ce que le dispositif de surveillance (7) coupe le trajet de lumière de la source de lumière de pompage (4).

5. Système de télécommunications optique selon la revendication 1 ou amplificateur à fibres optiques selon la revendication 2, caractérisé en ce que le dispositif de surveillance (7) contient un photodétecteur (71) avec amplificateur (72) placé en aval et d'autre part un interrupteur à seuil (73), qui émet un signal de commande dans le cas d'une tension de sortie d'amplificateur (U) qui est inférieure à une tension de référence (U_{ref}).
